# EUROPEAN PATENT SPECIFICATION

(11) **EP 4 592 582 B1**
(45) Date of publication and mention of the grant of the patent: **26.11.2025**
(21) Application number: 25152912.9
(22) Date of filing: 20.01.2025
(51) Int. Cl.: F17C 1/00

(54) **HIGH-PRESSURE SAFETY TANK SYSTEM FOR STORING GASES, IN PARTICULAR HYDROGEN**
HOCHDRUCK-SICHERHEITSTANKSYSTEM ZUR SPEICHERUNG VON GASEN, INSBESONDERE WASSERSTOFF
SYSTÈME DE RÉSERVOIR DE SÉCURITÉ À HAUTE PRESSION POUR LE STOCKAGE DE GAZ, EN PARTICULIER D'HYDROGÈNE

(30) Priority: 27.01.2024 PL 447624
(43) Date of publication of application: 30.07.2025
(73) Proprietor: Instytut Wysokich Cisnien Polskiej Akademii Nauk, 01-142 Warszawa (PL)
(72) Inventor: Morawski, Andrzej, 05-400 Otwock (PL); Cetner, Tomasz, 00-681 Warszawa (PL); Filipek, Stanislaw, 05-860 Plochocin (PL); Marczewska, Ewa, 04-923 Warszawa (PL); Kopec, Piotr, 05-400 Otwock (PL); Filar, Krzysztof, 52-110 Wroclaw (PL); Marczewski, Antoni, 04-937 Warszawa (PL); Jedrzejewski, Rafal, 02-803 Warszawa (PL)
(74) Representative: AOMB Polska Sp. z.o.o.

(56) References cited:
- CN-A- 112 539 344
- DE-A1- 10 160 701
- DE-A1- 102011 082 726
- DE-B3- 102021 206 794
- DE-B4- 102019 202 894

## Description

The subject of the invention is a high-pressure, safe tank system for storing gases in a large volume, in a high-density state. In particular, the tank is applicable to the storage of hydrogen and applies to situations where a certain amount of gas needs to be stored for a technological process. A particular application is the storage of hydrogen as an energy material for industrial processes or hydrogen distribution networks and hydrogen production stations.

The patent publication PL 241753 B1 describes a high-pressure gas storage tank, particularly for hydrogen, consisting of an inner tank enclosed within an outer tank. A free space is present between the inner and outer tanks. Each tank is equipped with an opening, through which a head assembly is inserted. This head assembly contains an inlet-outlet channel leading to the inner tank and another inlet-outlet channel leading to the outer tank. The tank is characterized by the fact that the free space contains fluid at a pressure greater than the ambient pressure. The head body has a bottom collar, and on its cylindrical part it has a first threaded part with a first nut screwed on and further a second threaded part with a collar on and a second nut screwed on. Between the bottom collar and the first nut there is attached an inner tank shell, and between the fitted collar and the second nut there is attached an outer tank shell. The bottom collar and the first nut and the fitted collar and the second nut have gaskets on their surfaces in contact with the inner tank shell and the outer tank shell.

A high-pressure gas storage tank is known from patent PL 196 481 B1 in which the base tank is tightly covered with a layer of fibers, which in turn are covered with a protective coating.

From patent application P.312453, there is known a container with a double shell in the cylindrical shape, having a metal inner wall made of steel sheet over which an outer layer made of low-density polyethylene (LDPE) film is applied. A layer of woven low-density polyethylene net is placed between the outer wall and the inner wall.

Cryogenic tanks for hydrogen storage are known which consist of an inner tank made of austenitic steel and an outer shell made of low-alloy steel with an anti-corrosion coating.

The cryogenic tank is vacuum insulated - the space between the inner tank and the outer shell of the cryogenic tank is filled with an insulating material - perlite.

Utility model publications CN209705707U and CN209705710U relate to a system based on cryogenic high-pressure hydrogen storage. The system comprises a container which has an inner cylinder installed in an outer cylinder through a support element. Between the inner and outer cylinder, there is a space that is evacuated to form a vacuum insulation layer. Coaxial openings are made in both the inner and outer cylinders, in which a head assembly is installed. This head assembly contains inlet and outlet channels for injecting or extracting hydrogen, as well as for evacuating air. In the example embodiment, the inner cylinder is made of aluminum alloy and is wrapped externally with carbon fiber, while the outer cylinder is made of austenitic stainless steel.

The publication of utility model CN208901068U describes a storage tank designed for hydrogen in supercritical conditions, consisting of an inner tank and an outer tank. A vacuum space is present between the inner and outer tanks. In the vacuum space there is a layer of thermal insulation. The outer side of the inner tank is reinforced by wrapping a layer of fiber reinforced epoxy resin based composite material.

DE 101 60 701 A1 relates to a tank with a plurality of containers, at least two of which are nested one inside the other.

From publication WO2017114880A1, a pressure tank is known, the design of which enables storage in towers, for example. The tank consists ofa first, inner tank comprising an inlet for filling or emptying it and a second, outer tank. The outer tank being adapted to be filled with a fluid other than hydrogen and encloses the inner tank. As the walls of the inner container are not an outer wall and therefore the hydrogen is not in direct contact with the outer walls so as to cause embrittlement or deterioration, the outer walls of the container may be subject to compression, for example during stacking in towers.

Known high-pressure compressible gas storage tanks therefore mainly refer to cryogenic tanks, where the inner tank serves to store the gas at reduced temperature, while the outer tank provides a shell to form a vacuum insulation layer. The additional outer shell can also serve as additional protection for the contents stored in the inner tank, in cases where, for example, tanks are stacked in towers.

The high-pressure tanks currently in use are constructed of a rounded shell of high mechanical strength, inside which the compressed gas is enclosed. A valve or valves installed in the shell wall are used for filling and emptying the tank. The nominal maximum pressure of the stored gas is determined by the design of the shell wall - primarily the choice of material and its thickness, which must ensure both that diffusion of the gas through the shell wall is minimized and that the tensile forces acting from the compressed gas on the walls of the vessel are maintained.

Tanks with a single layer shell, usually steel, belong to the 2nd generation of tanks. To reduce the weight of the tank, multilayer shells are used in which one material provides impermeability (no diffusion) and the other provides mechanical strength. The inner layer can be made of metal (3rd generation) or plastic (4th generation). The outer layer is made of composite materials, such as carbon fiber with resin. 5th Generation tanks are also known, in which there is no liner shell and the entire tank is made of carbon fiber or glass fiber, which in earlier generations served as a braid to reinforce the tank shell.

Pressure tanks known from the state of the art provide basic operational safety, however, in the event of a leakage or failure, they lose their entire stored gas content.

The object of the invention is therefore to propose a system for a high-pressure tank for storing gases, especially hydrogen, in a high-density state, with or without temperature reduction, which, in the event of failure, e.g. leakage, will make it possible to increase the safety of use of the high-pressure tank, including ensuring its safe continued operation. The tank should have a high resistance to the pressure inside it. The design of the vessel should ensure long, trouble-free operation and reduce susceptibility to fatigue effects.

This objective is fulfilled by a high-pressure safety storage tank system for storing gases, in particular hydrogen, comprising a tank made of an inner tank located in an outer tank. There is a free space between the inner tank and the outer tank, and each tank has a supply line provided and the free space is filled with a support fluid at a pressure greater than the ambient pressure.

The essence of the system is that there are additional inner tanks inside the outer tank and each inner tank has a separate supply line leading outside the outer tank and the supply lines of the inner tanks are connected to a compressor gas supply source and the supply line of the outer tank is connected to a compressor support fluid supply source. There is an actuated three-way valve on each of the inner tank supply lines and on the outer tank supply line. From the three-way valve on the outer tank supply line, there is an emergency line for support fluid, which is connected to the three-way valves on the inner tank supply lines. Downstream of the three-way valves on each of the inner tank supply lines there is a gas pressure sensor, and downstream of the three-way valve on the outer tank supply line there is a support fluid pressure sensor.

The outer tank has a gas presence sensor and an emergency drain valve, while the valve drives and sensors are connected to a control system with a controller.

Preferably, a gas recovery line with a filter is connected to the emergency drain valve, incorporated into the system upstream of the compressor at the gas supply source.

The shell of the inner tank or the outer tank shell are made of metal, plastic, composite, metal-plastic system, metal-composite system, plastic-composite system, plastic-plastic system or composite-composite system, wherein the shell of the inner tank for stored hydrogen shall be made of a material for which, at a pressure of 350 bar, the loss is no greater than 2 cm³/h of normal hydrogen per 1 liter of water volume of the tank.

In the embodiment where hydrogen is stored, the material is steel, aluminum Al, polyethylene PE, high-density polyethylene PE-HD, or ultra-high molar weight polyethylene PE-UHMW.

Optionally, the system includes an exchanger.

In the tank system according to the invention, the inner tanks are connected to each other to form a single working volume. Each outer tank is equipped with its own separate connection with a three-way valve. All connecting elements are located outside the entire tank and preferably form a capillary system. The inner tanks are supported by the pressure of the stored fluid, e.g. water in the chamber of the outer tank, which reduces the stresses resulting from the pressure of the stored gas in the inner tanks. This allows more gas to be stored. An additional feature is that the external fluid forms a barrier against contact between the stored gas and air (e.g. contact between hydrogen and atmospheric oxygen). The system makes it possible to shut down part of the working volume in the event of any of the internal tanks being unsealed and to continue operation without taking the entire tank out of service. If a leak is detected in the inner tank, the gas supply valve is closed and the support fluid supply valve is opened to equalize the pressure outside and inside the individual section of the inner tank. The gas that has escaped from the faulty inner tank collects in the upper section of the outer tank and is then discharged from the outer tank via an emergency release valve in such a way as to prevent the formation of a mixture of explosive proportions. Optionally, it is possible to store it further or to use it after the recovered gas has passed through the filter unit. The recovered gas, e.g. hydrogen, can be sent back to the compressor feed, whereby the gas is injected into the internal tanks. Because the working volume is divided into smaller, independent units, it is possible to increase safety by reducing the likelihood of a sudden leak and the release of a large volume of gas at one time. This enables the released gas from any of the inner tanks to be more easily, safely discharged through the outer tank.

A tank system in which the external tank has a gas presence sensor and the valve actuators and sensors are connected to a control system with a controller allows the pressure of the support fluid in the external tank to be measured and regulated as part of the normal tank cycle by dynamically varying the amount in the free space.

Filling the free space between the inner and outer tanks with a controlled pressure, greater than the ambient pressure, leads to an inward pre-stress of the inner shell, called support pressure, and allows the pressure and density of the gas in the inner tank to be increased by the pressure of the fluid in the free space. The support pre-stress allows the single-shell design of the inner tanks to be maintained while fully retaining its strength. The amount of fluid between the shells can be fixed, providing constant support pressure throughout the filling, storage and emptying cycle of the tank. Reducing stresses in the inner and outer tanks during the filling and emptying cycle extends the life of the tanks, reducing fatigue effects.

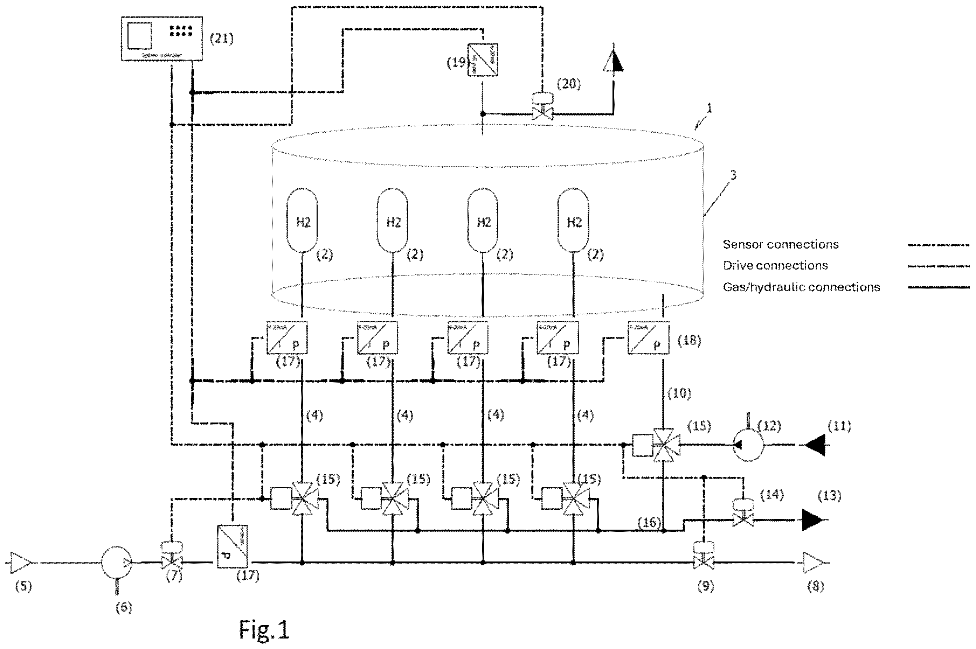

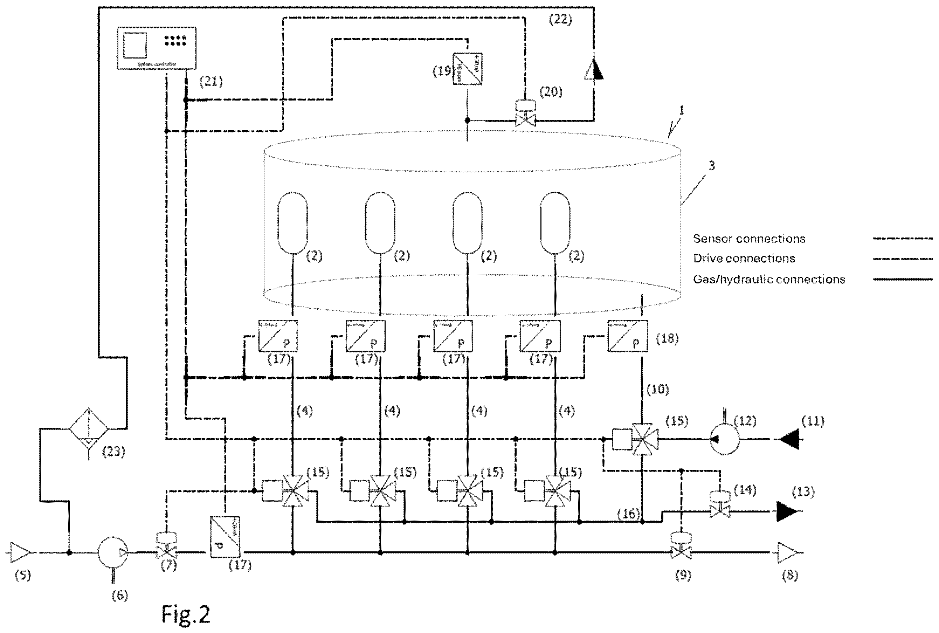

The object of the invention is shown in an exemplary embodiment and in the drawing, in which fig.1 shows a system in a variant without a gas recovery line, fig.2 shows a system in a variant with a gas recovery line.

### Example 1

The system of a high-pressure safety storage tank for storing gases, in particular hydrogen, comprises a tank 1 made up of inner tanks 2, the number of which can be freely selected according to the user's needs, located in an outer tank 3. Between the inner tanks 2 and the outer tank 3 there is a free space filled with a support fluid at a pressure higher than the ambient pressure. Each of the inner tanks 2 has a separate supply line 4 leading outside the outer tank 3. The supply lines 4 of the inner tanks 2 are connected to a gas supply source 5 with a compressor 6. Downstream of the compressor 6 there is an inlet valve 7 and at the end of the line there is an output 8 of compressed gas with a gas output valve 9. The supply line 10 of the outer tank 3 is connected to a support fluid supply source 11 with a compressor 12. The support fluid supply line has a support fluid output 13 with a support fluid output valve 14. There is an actuated three-way valve 15 on each of the supply lines 4 of the inner tank 2 and on the supply line 10 of the outer tank 3. From the three-way valve 15 on the supply line 10 of the outer tank 3, there is a line 16 for emergency supply of support fluid, which is connected to the three-way valves 15 on the supply lines 4 of the inner tanks 2. Downstream of the three-way valves 15 on each of the supply lines 4 of the inner tank 2 there is a gas pressure sensor 17. Downstream of the three-way valve 15 on the supply line 10 of the outer tank 3 there is a support fluid pressure sensor 18. At its highest point, the outer tank 3 has a gas presence sensor 19 and an emergency drain valve 20. Valve actuators 7, 9, 14, 15, 20 and sensors 17, 18, 19 are connected to a control system with a controller 21. All supply lines 4, 10 and line 16 of the emergency support fluid supply, starting from supply sources 5 or 11 respectively, are capillaries.

The shell of the inner tank 2 is made of a material with a low diffusion coefficient for hydrogen, and this material is, for example, steel or aluminium Al. By material with a low diffusion coefficient for hydrogen, we mean a material for which, at a pressure of 350 bar, the hydrogen loss is no more than 2 cm³/h per 1 litre of tank water volume, which means a loss of approximately 0.00018 g H₂. The shell can also, without limitation, be made of the following materials: polyethylene PE, high-density polyethylene PE-HD, or ultra-high molar weight polyethylene PE-UHMW. The outer tank shell 3 is made of metal, but it is possible, without limitation, to be made of: metal, plastic, composite, metal-plastic system, metal-composite system, plastic-plastic system, plastic-composite system or composite-composite system. For both the inner and outer tank, the shells can be made by welding, casting, broaching or other molding techniques. A reinforcing braid of carbon fiber, glass fiber, aramid fiber, basalt fiber, or any other high-strength fiber used in polymer-fiber composites is possible, but not necessary, on both the inner and outer tank shells.

### Example 2

The system is made as in example 1, except that a gas recovery line 22 with a filter 23 is connected to the emergency drain valve 20. The line 22 is connected to the system upstream of the compressor 6 at the gas supply source 5. The gas recovery line is a capillary.

### List of elements

- 1: tank
- 2: inner tank
- 3: outer tank
- 4: supply line of the inner tank
- 5: source of gas supply
- 6: gas compressor
- 7: gas inlet valve
- 8: compressed gas outlet
- 9: gas outlet valve
- 10: supply line of the outer tank
- 11: power source for support fluid
- 12: support fluid compressor
- 13: support fluid outlet
- 14: support fluid outlet valve
- 15: three-way valve
- 16: emergency supply line for support fluid
- 17: gas pressure sensor
- 18: support fluid pressure sensor
- 19: gas presence sensor
- 20: emergency drain valve
- 21: controller
- 22: gas recovery line
- 23: filter

## Claims

1. A high-pressure safety gas storage system, in particular for hydrogen, comprising a tank made up of an inner tank, located in an outer tank, wherein between the inner tank and the outer tank there is a free space and each tank has a supply line and the free space is filled with a support fluid at a pressure greater than the ambient pressure, wherein inside the outer tank (3) there are additional inner tanks (2) and each inner tank (2) has a separate supply line (4) leading outside the outer tank (3) and the supply lines (4) of the inner tanks (2) are connected to a gas supply source (5) with a compressor (6) and the supply line (10) of the outer tank (3) is connected to a support fluid supply source (11) with a compressor (12) and on each of the supply lines (4) of the inner tanks and on the supply line (10) of the outer tank (3) there is a three-way valve (15) with an actuator, wherein from the three-way valve (15) on the supply line (10) of the outer tank (3) there is a line (16) for emergency supply of support fluid, which is connected to the three-way valves (15) on the supply lines (4) of the inner tanks (2), and downstream of the three-way valves (15) on each of the supply lines (4) of the inner tanks (2) there is a gas pressure sensor (17), and downstream of the three-way valve (15) on the supply line (10) of the outer tank (3) there is a support fluid pressure sensor (18) and, in addition, the outer tank (3) has a gas presence sensor (19) and an emergency drain valve (20), while the valve actuators (15, 20) and sensors (17, 18, 19) are connected to a control system with a controller (21).

2. A system according to claim 1, **characterized in that** a gas recovery line (22) with a filter (23) is connected to the emergency drain valve (20), connected to the system upstream of the compressor (6) at the gas supply source (5).

3. The system according to claim 1 or 2, **characterized in that** the shell of the inner tank (2) or outer tank (3) is made of metal, plastic, composite, metal-plastic system, metal-composite system, plastic-composite system, plastic-plastic system, or composite-composite system, wherein for stored hydrogen the shell of the inner tank (2) is made of a material for which, at a pressure of 350 bar, the H2 loss is no greater than 2 cm³/h per 1 liter of water volume of the tank.

4. The system according to any of claim 3, **characterized in that** for stored hydrogen the material of the inner tank shell (2) is steel, aluminum Al, polyethylene PE, high density polyethylene PE-HD, or ultra-high molar weight polyethylene PE-UHMW.

5. The system according to any of claims 1-4, **characterized in that** the supply lines (4, 10) and the line (16) for emergency supply of the support fluid, starting from the supply sources (5, 11) are capillaries.

6. The system according to any of claims 2-5, **characterized in that** the gas recovery line (22) is a capillary.

7. The system according to any of claims 1-6, **characterized in that** it comprises an exchanger for cooling the support fluid.

## Patentansprüche

1. Hochdruck-Sicherheitsgasspeichersystem, insbesondere für Wasserstoff, umfassend einen Behälter, der aus einem Innenbehälter besteht, der in einem Außenbehälter angeordnet ist, wobei zwischen dem Innenbehälter und dem Außenbehälter ein Zwischenraum vorhanden ist und jeder Behälter eine Zuleitung aufweist, und der Zwischenraum mit einer Stützflüssigkeit bei einem Druck, der höher ist als der Umgebungsdruck, gefüllt ist,
wobei sich innerhalb des Außenbehälters (3) zusätzliche Innenbehälter (2) befinden und jeder Innenbehälter (2) eine separate Zuleitung (4) aufweist, die nach außen aus dem Außenbehälter (3) geführt ist,
und die Zuleitungen (4) der Innenbehälter (2) mit einer Gasversorgungsquelle (5) mit einem Kompressor (6) verbunden sind,
und die Zuleitung (10) des Außenbehälters (3) mit einer Versorgungsquelle (11) für die Stützflüssigkeit mit einem Kompressor (12) verbunden ist,
und sich auf jeder der Zuleitungen (4) der Innenbehälter sowie auf der Zuleitung (10) des Außenbehälters (3) ein Dreiwegeventil (15) mit einem Antrieb befindet, wobei von dem Dreiwegeventil (15) auf der Zuleitung (10) des Außenbehälters (3) eine Leitung (16) für die Notversorgung mit Stützflüssigkeit ausgeht, die mit den Dreiwegeventilen (15) auf den Zuleitungen (4) der Innenbehälter (2) verbunden ist,
und stromabwärts der Dreiwegeventile (15) auf jeder der Zuleitungen (4) der Innenbehälter (2) ein Gasdrucksensor (17) angeordnet ist,
und stromabwärts des Dreiwegeventils (15) auf der Zuleitung (10) des Außenbehälters (3) ein Stützflüssigkeitsdrucksensor (18) angeordnet ist,
und der Außenbehälter (3) zusätzlich einen Gasanwesenheitssensor (19) und ein Notablassventil (20) aufweist,
wobei die Ventilantriebe (15, 20) und die Sensoren (17, 18, 19) mit einem Steuersystem mit einem Regler (21) verbunden sind.

2. System nach Anspruch 1, **dadurch gekennzeichnet, dass** eine Gasrückführleitung (22) mit einem Filter (23) an das Notablassventil (20) angeschlossen ist, die stromaufwärts des Kompressors (6) an der Gasversorgungsquelle (5) mit dem System verbunden ist.

3. System nach Anspruch 1 oder 2, **dadurch gekennzeichnet, dass** die Hülle des Innenbehälters (2) oder des Außenbehälters (3) aus Metall, Kunststoff, Verbundwerkstoff, Metall-Kunststoff-System, Metall-Verbund-System, Kunststoff-Verbund-System, Kunststoff-Kunststoff-System oder Verbund-Verbund-System besteht,
wobei, bei gespeichertem Wasserstoff, die Hülle des Innenbehälters (2) aus einem Material besteht, bei dem der H₂-Verlust bei einem Druck von 350 bar höchstens 2 cm³/h pro 1 Liter Wasserinhalt des Behälters beträgt.

4. System nach einem der Ansprüche 3, **dadurch gekennzeichnet, dass** bei gespeichertem Wasserstoff das Material der Hülle des Innenbehälters (2) Stahl, Aluminium (Al), Polyethylen (PE), Polyethylen hoher Dichte PE-HD oder Polyethylen mit ultrahohem Molekulargewicht PE-UHMW ist.

5. System nach einem der Ansprüche 1 bis 4, **dadurch gekennzeichnet, dass** die Zuleitungen (4, 10) sowie die Leitung (16) für die Notversorgung mit Stützflüssigkeit, ausgehend von den Versorgungsquellen (5, 11), Kapillaren sind.

6. System nach einem der Ansprüche 2 bis 5, **dadurch gekennzeichnet, dass** die Gasrückführleitung (22) eine Kapillare ist.

7. System nach einem der Ansprüche 1 bis 6, **dadurch gekennzeichnet, dass** es einen Wärmetauscher zum Kühlen der Stützflüssigkeit umfasst.

## Revendications

1. **Système de stockage de gaz de sécurité à haute pression,** en particulier pour l'hydrogène, comprenant un réservoir constitué d'un réservoir intérieur disposé dans un réservoir extérieur, un espace libre étant présent entre le réservoir intérieur et le réservoir extérieur, chaque réservoir comportant une conduite d'alimentation, et l'espace libre étant rempli d'un fluide de support à une pression supérieure à la pression ambiante,
**dans lequel** à l'intérieur du réservoir extérieur (3) se trouvent des réservoirs intérieurs supplémentaires (2), chaque réservoir intérieur (2) possédant une conduite d'alimentation distincte (4) menant vers l'extérieur du réservoir extérieur (3),
les conduites d'alimentation (4) des réservoirs intérieurs (2) étant reliées à une source d'alimentation en gaz (5) munie d'un compresseur (6), et la conduite d'alimentation (10) du réservoir extérieur (3) étant reliée à une source d'alimentation (11) de fluide de support munie d'un compresseur (12),
chaque conduite d'alimentation (4) des réservoirs intérieurs et la conduite d'alimentation (10) du réservoir extérieur (3) comportant une vanne à trois voies (15) avec actionneur,
**dans lequel** à partir de la vanne à trois voies (15) de la conduite d'alimentation (10) du réservoir extérieur (3) part une conduite (16) d'alimentation d'urgence en fluide de support, reliée aux vannes à trois voies (15) des conduites d'alimentation (4) des réservoirs intérieurs (2),
et, en aval des vannes à trois voies (15) sur chaque conduite d'alimentation (4) des réservoirs intérieurs (2), est disposé un capteur de pression de gaz (17),
et en aval de la vanne à trois voies (15) sur la conduite d'alimentation (10) du réservoir extérieur (3), un capteur de pression du fluide de support (18),
le réservoir extérieur (3) comportant en outre un capteur de présence de gaz (19) et une vanne de vidange d'urgence (20),
les actionneurs des vannes (15, 20) et les capteurs (17, 18, 19) étant reliés à un système de commande muni d'un contrôleur (21).

2. **Système selon la revendication 1, caractérisé en ce qu'**une conduite de récupération de gaz (22) munie d'un filtre (23) est reliée à la vanne de vidange d'urgence (20), cette conduite étant connectée au système en amont du compresseur (6) de la source d'alimentation en gaz (5).

3. **Système selon la revendication 1 ou 2, caractérisé en ce que** la paroi du réservoir intérieur (2) ou du réservoir extérieur (3) est réalisée en métal, en plastique, en matériau composite, en système métal-plastique, métal-composite, plastique-composite, plastique-plastique ou composite-composite, et pour l'hydrogène stocké, la paroi du réservoir intérieur (2) est constituée d'un matériau pour lequel, à une pression de 350 bars, la perte d'H₂ ne dépasse pas 2 cm³/h par litre de volume d'eau du réservoir.

4. **Système selon la revendication 3, caractérisé en ce que**, pour l'hydrogène stocké, le matériau de la paroi du réservoir intérieur (2) est de l'acier, de l'aluminium Al, du polyéthylène PE, du polyéthylène haute densité PE-HD ou du polyéthylène de masse moléculaire ultra-élevée PE-UHMW.

5. **Système selon l'une quelconque des revendications 1 à 4, caractérisé en ce que** les conduites d'alimentation (4, 10) et la conduite (16) d'alimentation d'urgence en fluide de support, à partir des sources d'alimentation (5, 11), sont des capillaires.

6. **Système selon l'une quelconque des revendications 2 à 5, caractérisé en ce que** la conduite de récupération de gaz (22) est un capillaire.

7. **Système selon l'une quelconque des revendications 1 à 6, caractérisé en ce qu'**il comprend un échangeur destiné au refroidissement du fluide de support.
